# EUROPEAN PATENT APPLICATION

(11) **EP 4 787 138 A1**
(43) Date of publication of application: **05.08.2026**
(21) Application number: 25155577.7
(22) Date of filing: 03.02.2025
(51) Int. Cl.: G06F 3/12

(54) **A PRINTER COMPRISING A PLURALITY OF DISPLAYS FOR PARALLEL USER INTERACTION AND A METHOD THEREFOR**

(71) Applicant: CANON KABUSHIKI KAISHA, Tokyo 146-8501 (JP)
(72) Inventor: VERDUIN, Pieter, Venlo (NL); JANSSEN, Jeroen A.P., Venlo (NL)
(74) Representative: Canon Production Printing IP Department

(57) **Abstract**

A printer comprising a plurality of displays for parallel user interaction, a print controller for controlling the printer, wherein the print controller comprises a session system which registers a session from a user via a display of the plurality of displays, wherein the session system keeps track of which session is requested per user per display and an authorization system which keeps track of rights given to the user of a display for a kind of action to be performed during a session.

## Description

### BACKGROUND OF THE INVENTION

### Field of the invention

The present invention relates to a printer comprising a plurality of displays for parallel user interaction and a print controller for controlling the printer.

The print controller may also be referred to as controller or as control unit hereinafter.

The printer may also be referred to as a printing system or a print device.

The at least one print head may also be referred to as a print unit.

A print job may also be referred to as a job.

A print queue may also be referred to as a print job queue.

The entry station may be an input tray or an input feeder.

Print media may also be abbreviated to media.

### Description of Background Art

On multi display devices supporting multiple parallel users, a problem may occur for all actions that can only be done by one user at the same time. When two (or more) users want to do said (single-user)-action, full rights for the action are allowed to the first user, and all follow up users with just get either a 'read-only' or 'accessDenied' type of message. However the above-mentioned solution has drawbacks.

### SUMMARY OF THE INVENTION

It is the objective of the present invention to provide a printer and a method for multiple users accessing the displays of the printer in a productive way.

In accordance with the present invention, the print controller comprises a session system and an authorization system, wherein the session system registers a session by a user via a display of the plurality of displays and keeps track of which session is requested per user per display, and the authorization system registers rights given to the user of a display of the plurality of displays for a kind of action to be performed during a session. There may be multiple types of sessions and the print controller determines which type of request is being requested.

According to an embodiment the printer has a polygonal footprint and at each of at least two edges of the printer according to the polygonal footprint a display of the plurality of displays is mounted to the printer.

According to a further embodiment a first display is mounted at a first edge and a second display is mounted at a second edge, the first edge being located opposite to the second edge.

According to an embodiment a first display is mounted at the input module of the printer for inputting print media and a second display is mounted at the output module for unloading stacks of printed media. According to a further embodiment the input module is configured for automatic pallet replacement.

According to an embodiment the printer is a high-volume sheet-fed printer or a high-volume continuous feed printer. However, the present invention may also be applied on a roll fed printer or rigid fed printer.

The present invention also relates to a method for controlling parallel user interaction on a plurality of displays of a printer comprising a plurality of displays for parallel user interaction, a print controller for controlling the printer, wherein the print controller comprises a session system which registers a session from a user via a display of the plurality of displays, wherein the session system keeps track of which session is requested per user per display and an authorization system which keeps track of rights given to the user of a display for a kind of action to be performed during a session., wherein the method comprises the steps of
a) the print controller receiving a request for a session from a first user via a first display of the plurality of displays,
b) the authorization system checking if the first user is allowed to start the session,
c) upon a positive check in step b),
   - creating an empty action list to store actions of the first user, and
   - the print controller giving a first session with rights to do actions to the first user on the first display and adding the first session to a list of sessions in the session system,
d) upon a negative check in step b), displaying a message on the first display that the session is read only, and no actions are allowed,
e) the print controller receiving a second request for a session from a second user via a second display of the plurality of displays,
g) the authorization system checking if the second user is allowed to start the session,
h) upon a positive check in step g), creating an empty action list to store actions for the second user,
i) upon a negative check in step g), displaying a message on the second display that the session is read only, and no actions are allowed, and the print controller giving a second session with no rights to do actions to the second user on the second display and adding the second session to a list of sessions in the session system, and
j) upon the first user closing the first session, the print controller removing the first and second session from the session list and giving a third session with rights to do actions to the second user on the second display and adding the third session to the list of sessions in the session system.

According to an embodiment for each action performed by the first user during the first session, the method comprises the steps of
a) the authorization system checking if the first user is allowed to perform the action,
b) upon a positive check in step a), adding the action to an action list of the first user,
c) upon a negative check in step a), displaying a message on the first display that the first user is not allowed to perform the action, and
d) upon the first user closing the first session,
d1) saving actions performed by the first user from the action list of the first user, or
d2) cancelling actions performed by the first user from the action list of the first user,
wherein, if step d1) is performed, results of the actions performed by the first user during the first session are visible to the second user on the second display.

According to an embodiment the step j) comprises the sub-step of notifying the second user on the second display that the first user has ended the first session, and asking the second user if he wants to start the third session on the second display.

According to an embodiment an action of the action list of a user of the printer is at least one out of an action for editing a printer system setting, an action for editing a print job property, a changing of media in the media catalogue, a process of calibrating media, a process to attain linearization curves, a process of checking potential media locations in the printer in a recovery flow of an operator recoverable error.

According to an embodiment a session is set up for editing a print job which has multiple print job settings or for editing print system settings.

According to an embodiment multiple actions are performable via a session, wherein a first part of the actions is allowed to be performed by the first user and a second part of the actions is allowed to be performed by the second user, and wherein the actions of the first part are related to a media input module of the printer and the actions of the second part are related to an output module of the printer.

The present invention also relates to a non-transitory software medium comprising executable program code configured to, when executed on a print controller, enable the print controller to perform the steps of the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Figs. 1(a), 1(b), 2(a), 2(b), 3(a), 3(b) are schematic drawings of printers according to embodiments of the present invention;
Fig. 4 is a schematic drawing of a print controller of a printer according to the present invention;
Figs. 5 - 7 is a flow diagram illustrating the steps of a first method according to the present invention;
Figs. 8 - 9 is a flow diagram illustrating the steps of a second method according to the present invention;
Fig. 10 is a schematic scenario of an embodiment of the method according to the present invention;
Fig. 11 is an example of a session list of the active sessions and an action list per session comprising all not yet saved actions; and
Fig. 12 is a diagram of a software product according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

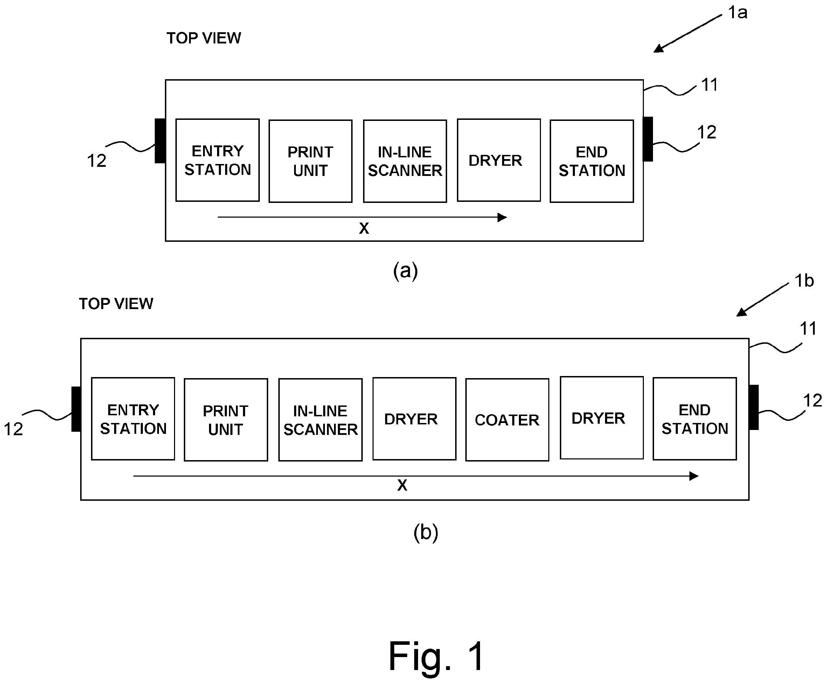

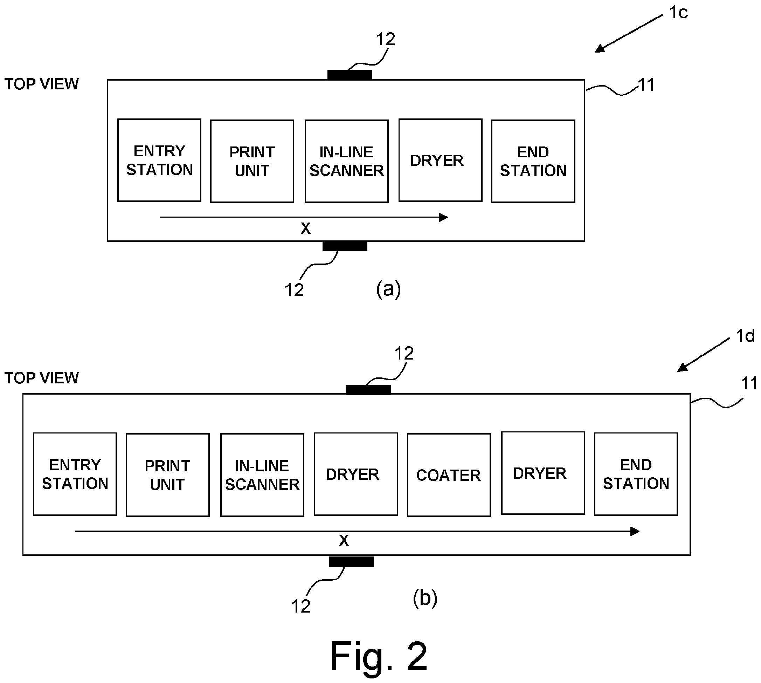

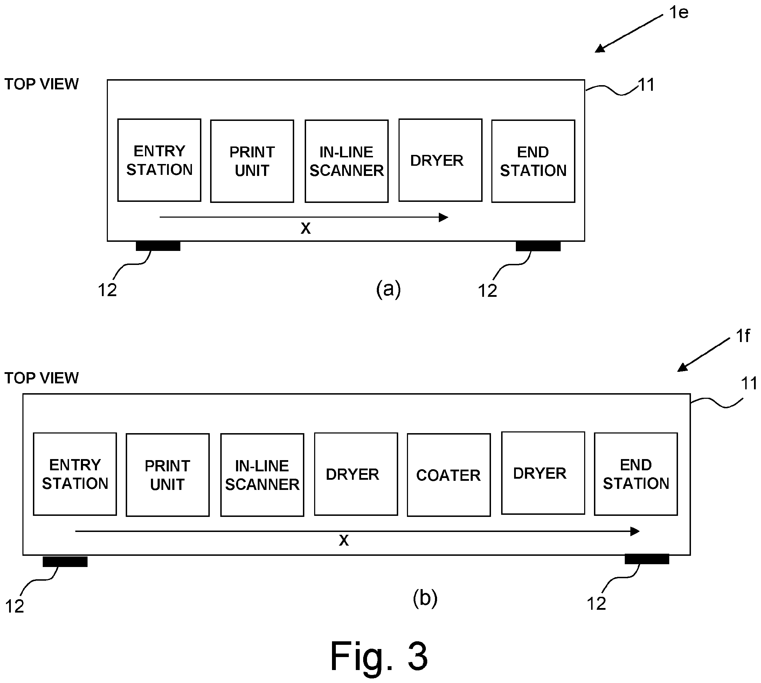

Figs. 1(a), 1(b), 2(a), 2(b), 3(a) and 3(b) are schematic top views of printers 1a - 1f respectively according to embodiments of the present invention. The printers 1a - 1f are configured to print on a substrate. The printers 1a - 1f comprise an entry station for receiving the substrate to be printed, a print unit comprising the at least one printhead for providing the marking material to the substrate, when a transport system moves the substrate along the at least one printhead in the media forward direction X, an in-line scanner to check the printed media, a dryer to dry the printed print media, optionally a coater to coat the dried print media and an additional dryer, and an end station for stacking or storing the printed print media. The print media may be cut sheets or a print media roll. According to the present invention the printers 1a - 1f comprise a plurality of displays 12 for parallel user interaction. The plurality of displays 12 are mounted on the housings 11 of the printers 1a - 1f and internally wired or wireless connected to a print controller of the printer 1a - 1f. The printers 1a - 1d have a polygonal footprint, e.g. a rectangular footprint, and at each of at least two edges of the printer according to the polygonal footprint a display of the plurality of displays is mounted to the printer 1a - 1d. A first display is mounted at a first edge and a second display is mounted at a second edge, wherein the first edge is located opposite to the second edge as shown in Figs. 1(a). 1(b), 2(a) and 2(b). However, other configurations of mounting the plurality of displays may be envisioned, for example two displays each of which are mounted at another end of a same (front) long side of the printer in the media forward direction X as shown in Figs. 3(a) and 3(b).

The printer 1a - 1f may be a high-volume sheet-fed printer or a high-volume continuous feed printer. However, other kind of printers, like a roll-to-sheet printer or a roll-to-roll printer, or a rigid printer may be envisioned.

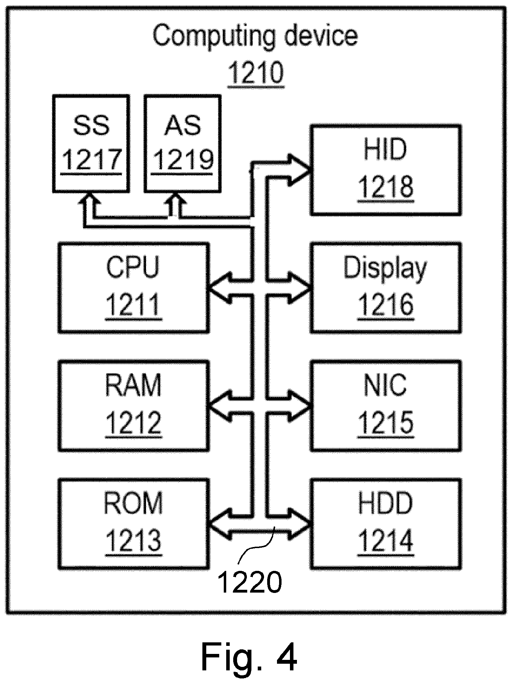

Fig. 4 shows a schematic diagram of the print controller of the printer according to the present invention. A typical implementation for the print controller is a general computing device 1210 comprising a Central Processing Unit (CPU) 1211 for processing instructions that are loaded into a volatile memory such as a Random Access Memory (RAM) 1212. The instructions may be loaded from a non-volatile memory such as a Read-Only Memory (ROM) 1213 or a Hard Disk Drive (HDD) 1214. Computer program may be loaded from a remote storage over a computer network or generically a communications network by means of a Network Interface Card (NIC) 1215. The computing device 1210 is operated through a Human Interface Device (HID) 1218. The operator may get feedback from the computing device 1210 through a display 1216 being a display from the plurality of displays. In order to be able to run computer programs implementing the present invention, the computing device 1210 stores an Operating System (OS) on its HDD 1214 or in its ROM 1213, the OS being loaded upon the computing device 1210 booting. The print controller 1210 comprises the session system SS 1217 and the authorization system AS 1219 according to the present invention. The session system SS 1217 registers a session by a user via a display 1216 of the plurality of displays and keeps track of which session is requested per user per display. The authorization system AS 1219 registers rights given to the user of a display 1216 of the plurality of displays for a kind of action to be performed during a session.

The afore-mentioned components 1211 - 1219 of the print controller 1210 are interconnected through a bus system 1220. Alternatively the session system SS 1217 and the authorization system AS 1219 may be installed as software applications on the HDD 1214 of the print controller 1210. The print controller optionally may comprise an image processing unit such as a Raster Image Processor (RIP). However, the control unit 1210 may also be a distributed control unit.

The CPU 1211 controls the printing system 1a - 1f in accordance with control programs stored in the ROM 1213 or on the HDD 1214 and a plurality of displays 1216 acting as a local user interface panel. The displays 1216 are connected to the print controller 1210 via HDMI for example. The CPU 1211 for example controls the motor system (not shown) which drives a transport system of the printing system 1a - 1f. The CPU 1211 may also control an image processing unit and a graphic processing unit (GPU). The ROM 1213 stores programs and data such as boot program, set-up program, various set-up data or the like, which are to be read out and executed by the CPU 1211. The hard disk 1214 is an example of a non-volatile storage unit for storing and saving programs and data which make the CPU 1211 execute a user interaction process to be described later. Also image quality control print jobs and the corresponding data may be stored in the hard disk 1214. The hard disk 1214 also comprises an area for saving the data of externally submitted print jobs. The externally submitted print jobs may comprise a print job ticket comprising print job settings. The programs and data on the HDD 1214 are read out onto the RAM 1212 by the CPU 1211 as needed. The RAM 1212 has an area for temporarily storing the programs and data read out from the ROM 1213 and HDD 1214 by the CPU 1211, and a work area which is used by the CPU 1211 to execute various processes. The NIC 1215 connects the control unit to a network and is designed to provide communication with workstations, the transport system and with other systems like ERP and MIS systems reachable via the network. The image processing unit may be implemented as a software component running on an operation system of the control unit or as a firmware program, for example embodied in a field-programmable gate array (FPGA) or an application-specific integrated circuit (ASIC). The image processing unit has functions for reading, interpreting and rasterizing the print job data. Said print job data contains image data to be printed (i.e. fonts and graphics that describe the content of the document to be printed, described in a Page Description Language or a raster file format like TIFF or JPEG), image processing attributes and print job settings.

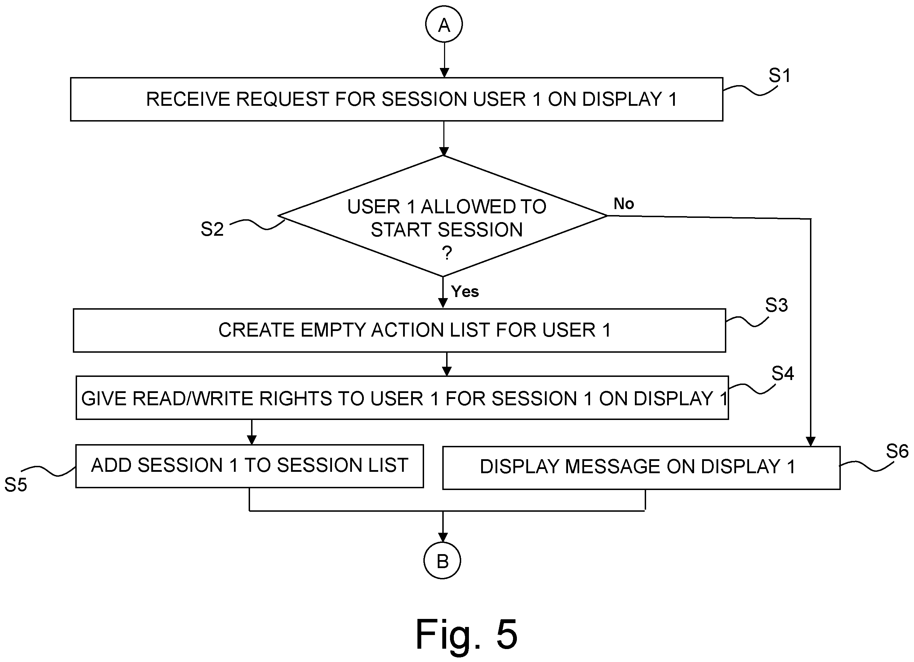

Fig. 5 - 7 is a flow diagram illustrating the steps of a first method according to the present invention. The first method starts in a starting point A in Fig. 5 which leads to a first step S1.

In the first step S1 the print controller receives a request for a session from a first user via a first display of the plurality of displays.

In a second step S2 the authorization system checks if the first user is allowed to start the session. The first user logs in to the first display with his credentials which are checked by the printing system. If he is allowed to start the session, the method proceeds to a third step S3. If not, the method proceeds to a sixth step S6.

In the third step S3 an empty action list is created to store actions of the first user.

In a fourth step S4 the print controller gives a first session with rights to do actions to the first user on the first display. Add a series of processes where the first user logs in to the first display and the printing system retrieves the first user's information/attributes. Without that explanation, it would be difficult to understand how to determine whether the first user has started a session.

In a fifth step S5 the print controller adds the first session to a list of sessions in the session system.

In the sixth step S6 a message is displayed on the first display that the session is read only, and no actions are allowed.

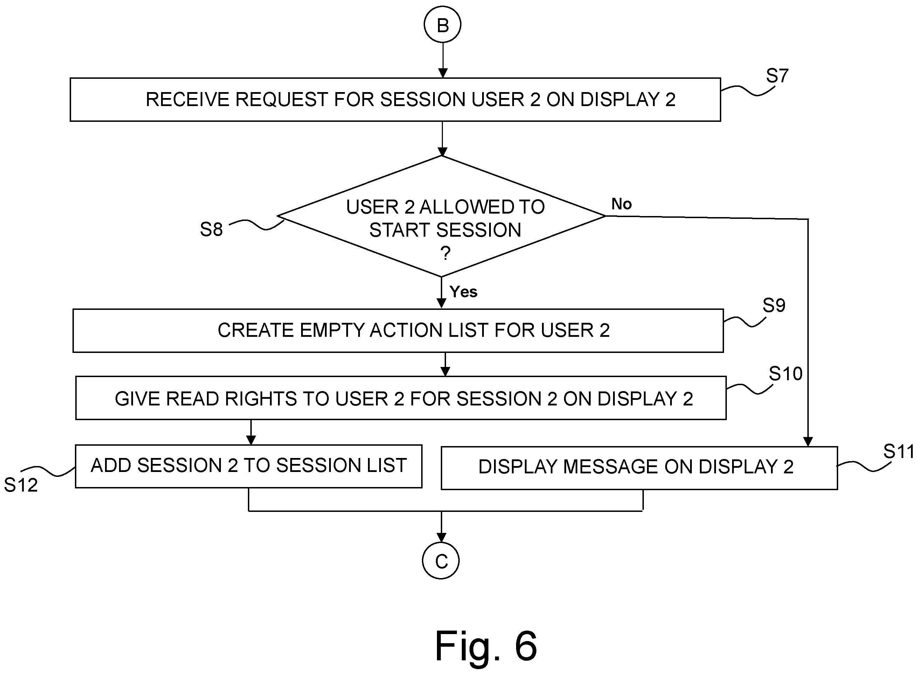

The fifth step S5 and the sixth step S6 lead to an intermediate waiting point B. The intermediate waiting point B leads to a seventh step S7 shown in Fig. 6.

In the seventh step S7 the print controller receives a second request for a session from a second user via a second display of the plurality of displays.

In an eighth step S8 the authorization system checks if the second user is allowed to start the session. If so, the method proceeds with a ninth step S9. If not so, the method proceeds with a tenth step S11.

In the ninth step S9 an empty action list is created to store actions for the second user.

In a tenth step S10 a message is displayed on the second display that the session is read only, and no actions are allowed.

In an eleventh step S11 the print controller gives a second session with no rights to do actions to the second user on the second display.

In a twelfth step S12 the second session is added to a list of sessions in the session system.

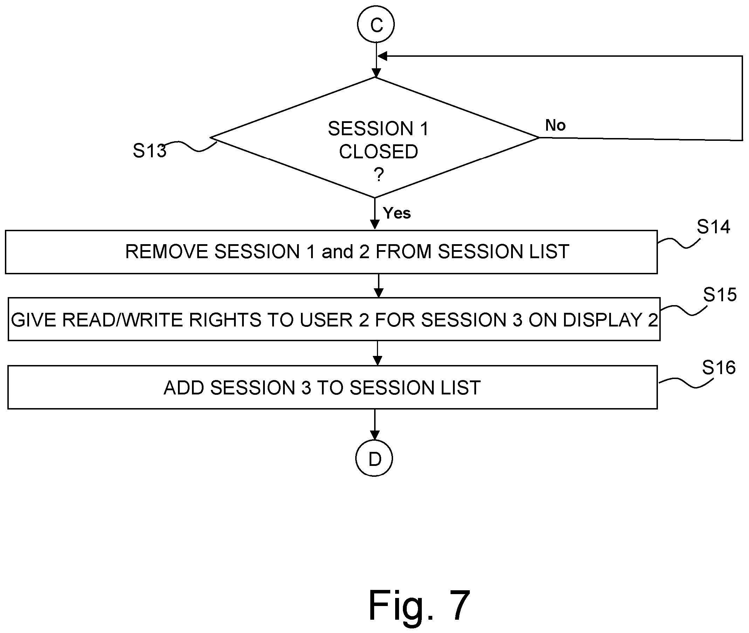

The eleventh step S11 and the twelfth step S12 lead to an intermediate waiting point C. The intermediate waiting point C leads to a thirteenth step S13 shown in Fig. 7.

In the thirteenth step S13 it is checked if the first user has closed the first session. If so, the method proceeds to a fourteenth step S14. If not so, the method returns to intermediate waiting point C.

In the fourteenth step S14 the print controller removes the first and second session from the session list.

In a fifteenth step S15 the print controller give a third session with rights to do actions to the second user on the second display.

In a sixteenth step S16 the third session is added to the list of sessions in the session system.

The method ends in an endpoint D.

Many variants of the method steps shown in Figs. 5 - 7 are possible which fall under the scope of the present invention.

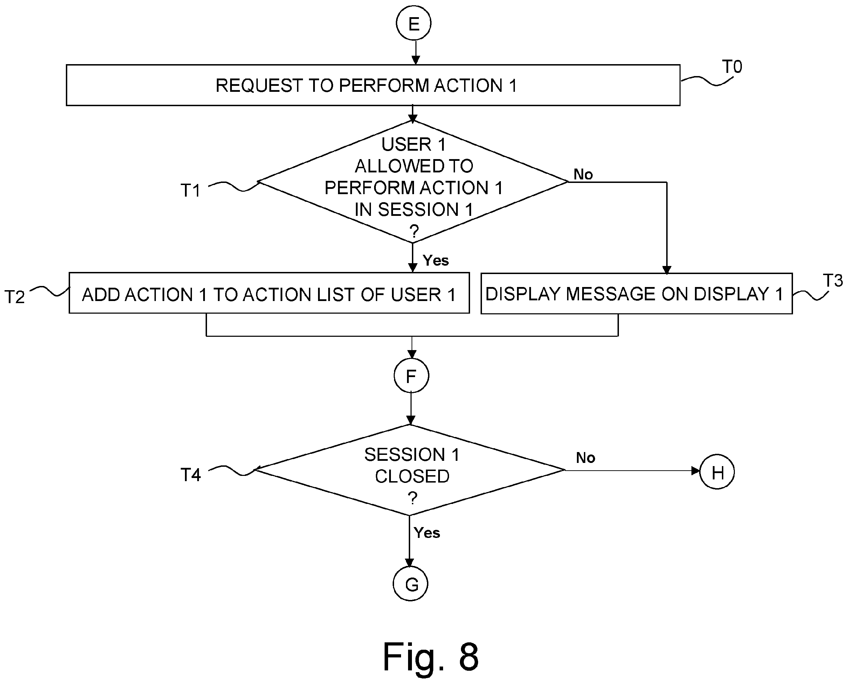

Figs. 8 - 9 is a flow diagram of a second method according to the present invention. The second method is an addition to the first method shown in the Figs. 5 - 7. The flow diagram in Figs. 8 - 9 is applied to each action performed by the first user during the first session.

The method starts in a starting point E which leads to an initial step T0.

In the initial step T0 a request for an action of the first user on the first display in first session is received. Multiple actions are performable via a session, wherein a first part of the actions is allowed to be performed by the first user and a second part of the actions is allowed to be performed by the second user. The actions of the first part are related to a media input module of the printer and the actions of the second part are related to an output module of the printer. For example a set or a change of a media size setting may be present in the first part. The media size to be handled by the printer may be A3, A2, B3 or B2. For example a set or a change of a stack height setting may be present in the second part. In a first step T1 the authorization system checks if the first user is allowed to perform the action. If so, the method proceeds to a second step T2. If not so, the method proceeds to a third step T3.

In the second step T2 the action is added to an action list of the first user.

In a third step T3 a message is displayed on the first display that the first user is not allowed to perform the action.

The second step T2 and the third step T3 lead to an intermediate waiting point F. The intermediate waiting point F leads to a fourth step T4.

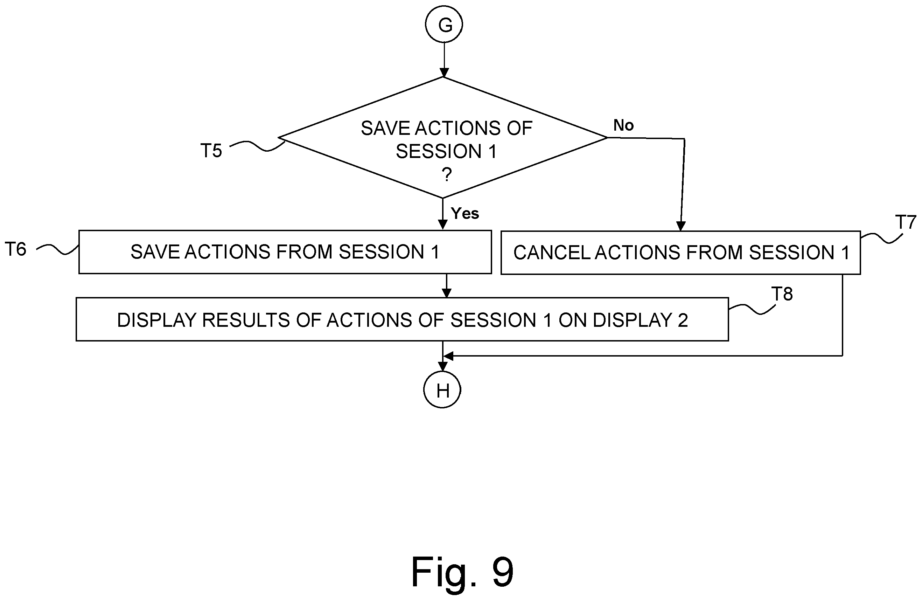

In a fourth step T4 it is checked if the first user has closed the first session. If so, the method proceeds to an intermediate waiting point G which leads to a fifth step T5 shown in Fig. 9. If not so, the method proceeds to an end point H.

In the fifth step T5 it is checked if the actions performed by the first user from the action list of the first user are requested to be saved. If so, the method proceeds to a sixth step T6. If not so, the method proceeds to a seventh step T7.

In the sixth step T6 the actions performed by the first user from the action list of the first user are saved.

In a seventh step T7 the actions performed by the first user from the action list of the first user are cancelled.

In an eighth step T8 results of the actions performed by the first user during the first session are displayed to the second user on the second display.

Both the seventh step T7 and the eighth step T8 lead to the end point H of the second method.

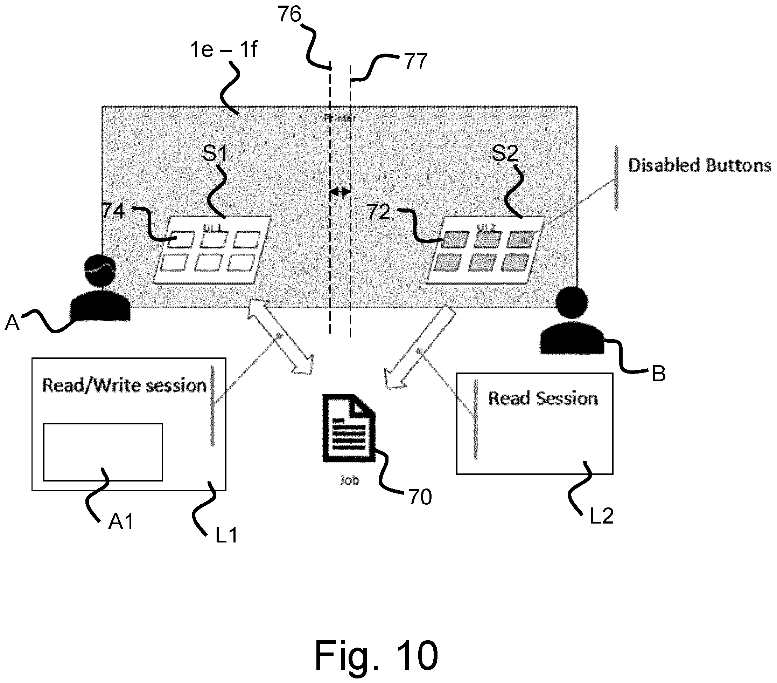

Fig. 10 is a schematic scenario of the method according to the present invention. The printer 1e - 1f is shown from the front side in a way that the middle part of the printer 1e - 1f is omitted as indicated by the dashed lines 76. 77. For convenience reasons printer 1e - 1f is chosen in this example wherein two displays S1, S2 are mounted on the front side of the printer as in Figs. 3(a) and 3(b). A first user A is working at the first display S1 and second user B is working at the second display S2.

The first user A was actually the user who is first-in-time to request a session L1 to edit a print job 70. Since the first user A is the first-in-time the session L1 given to him by the print controller is a read-write session enabling the first user A to read and write in the print job data 74 of the print job 70. The print job data 74 are enabled to be edited via the display S1. For the first user A an empty action list A1 is created in which actions he performs onto the print job 70 during the session L1 are registered.

The second user B who also requested a session on the print job 70, is given another session L2 by the print controller. The session L2 is actually a read session: the second user B may read the content 72 of the print job 70 but is not allowed to do any action on the content 72 of the print job 70. The content 72 of the print job 70 which is actually the same as print job data 74 shown in the first display S1 is disabled on the second display S2 indicated by the greying out of the content on the second display S2 in Fig. 7 in order to prevent the second user B to make any changes to the content 72 of the print job 70. No action list is created for the second user B. As soon as the first user ends his session L1, the first session L1 will be deleted from the session list and the second user B gets a message that he can proceed with a third session L3 (not shown), i.e. a read-write session, on the print job 70 via display S2. Session L2 may also be closed in the meanwhile.

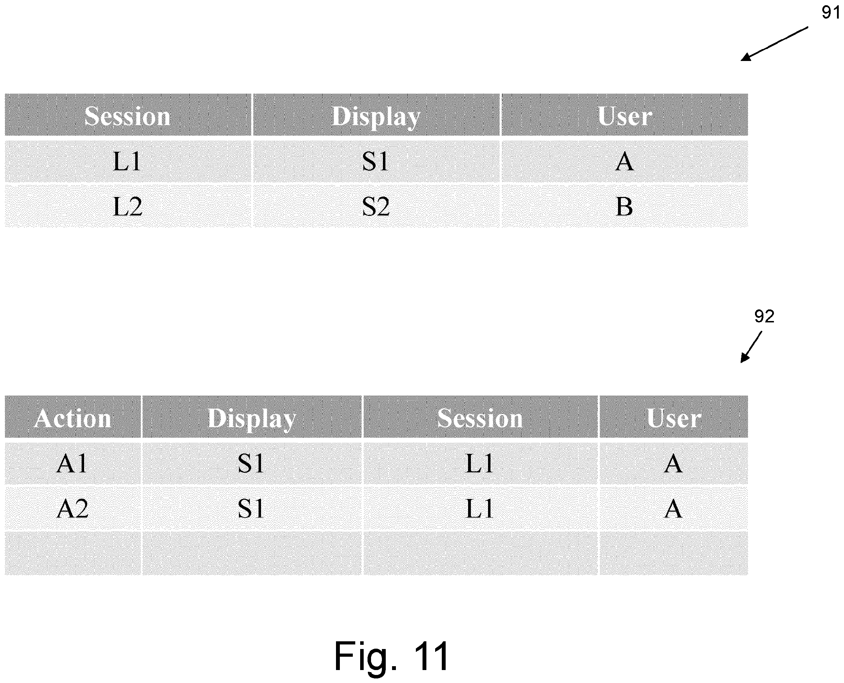

Fig. 11 is an example of a session list 91 of the active sessions L1, L2. Also an action list 92 per session is shown with all not yet saved actions. The session list 91 and the action list 92 are resident in the session system according to the present invention. In an alternative embodiment the session list 91 and the action lists 92 are combined into one large list. The authorization list for user A and B resides in the authorization system (not shown).

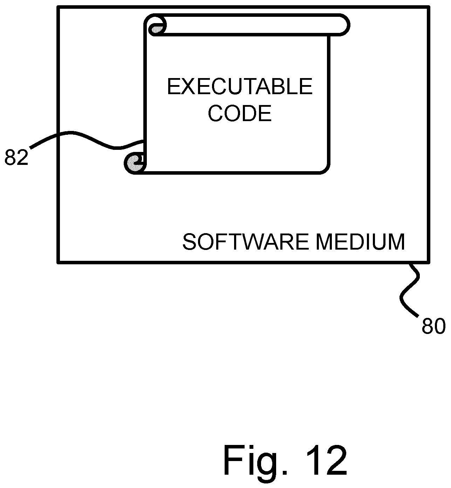

Fig. 12 schematically shows a non-transitory software medium 80 according to the invention. The software medium 80 comprises executable code 82 configured to, when executed, perform the method according to the invention, e.g. as described with respect to either the printing system 1a - 1f shown in Figs. 1(a), 1(b), 2(a), 2(b), 3(a), 3(b) or the method of controlling the printing system 1a - 1f according to the present invention shown in Figs. 5 - 9 and/or according to any of the variants and modifications of the printing system and/or of the method described hereinbefore.

The non-transitory software medium 80 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A printer comprising a plurality of displays for parallel user interaction and a print controller for controlling the printer, wherein the print controller comprises a session system and an authorization system,
wherein
the session system registers a session by a user via a display of the plurality of displays and keeps track of which session is requested per user per display, and
the authorization system registers rights given to the user of a display of the plurality of displays for a kind of action to be performed during a session.

2. A printer according to claim 1, wherein the printer has a polygonal footprint and at each of at least two edges of the printer according to the polygonal footprint a display of the plurality of displays is mounted to the printer.

3. A printer according to claim 2, wherein a first display is mounted at a first edge and a second display is mounted at a second edge, the first edge being located opposite to the second edge.

4. A printer according to any of the preceding claims, wherein a first display is mounted at the input module of the printer for inputting print media and a second display is mounted at the output module for unloading stacks of printed media.

5. A printer according to claim 4, wherein the input module is configured for automatic pallet replacement.

6. A printer according to any of the preceding claims, wherein the printer is a high-volume sheet-fed printer or a high-volume continuous feed printer.

7. A method for controlling parallel user interaction on a plurality of displays of a printer comprising a plurality of displays for parallel user interaction, a print controller for controlling the printer, wherein the print controller comprises a session system which registers a session from a user via a display of the plurality of displays, wherein the session system keeps track of which session is requested per user per display and an authorization system which keeps track of rights given to the user of a display for a kind of action to be performed during a session., wherein the method comprises the steps of
a) the print controller receiving a request for a session from a first user (A) via a first display (S1) of the plurality of displays,
b) the authorization system checking if the first user (A) is allowed to start the session,
c) upon a positive check in step b),
- creating an empty action list to store actions of the first user (A), and
- the print controller giving a first session (L1) with rights to do actions to the first user (A) on the first display (S1) and adding the first session (L1) to a list of sessions in the session system,
d) upon a negative check in step b), displaying a message on the first display (S1) that the session is read only, and no actions are allowed,
e) the print controller receiving a second request for a session from a second user (B) via a second display (S2) of the plurality of displays,
g) the authorization system checking if the second user (B) is allowed to start the session,
h) upon a positive check in step g), creating an empty action list to store actions for the second user (B),
i) upon a negative check in step g), displaying a message on the second display (S2) that the session is read only, and no actions are allowed, and the print controller giving a second session (L2) with no rights to do actions to the second user (B) on the second display (S2) and adding the second session (L2) to a list of sessions in the session system, and
j) upon the first user (A) closing the first session (L1), the print controller removing the first and second session (L1, L2) from the session list and giving a third session (L3) with rights to do actions to the second user (B) on the second display (S2) and adding the third session (L3) to the list of sessions in the session system.

8. A method according to claim 7, wherein for each action performed by the first user (A) during the first session (L1), the method comprises the steps of
a) the authorization system checking if the first user (A) is allowed to perform the action,
b) upon a positive check in step a), adding the action to an action list of the first user (A),
c) upon a negative check in step a), displaying a message on the first display (S1) that the first user (A) is not allowed to perform the action, and
d) upon the first user (A) closing the first session (L1),
d1) saving actions performed by the first user (A) from the action list of the first user (A), or
d2) cancelling actions performed by the first user (A) from the action list of the first user (A),
wherein, if step d1) is performed, results of the actions performed by the first user (A) during the first session (L1) are visible to the second user (B) on the second display (S2).

9. A method according to claim 7, wherein the step j) comprises the sub-step of notifying the second user (B) on the second display (S2) that the first user (A) has ended the first session (L1), and asking the second user (B) if he wants to start the third session (L3) on the second display (S2).

10. A method according to any of the claims 7 - 9, wherein a session is set up for editing a print job which has multiple print job settings or editing print system settings.

11. A method according to any of the claims 7 - 10, wherein multiple actions are performable via a session, wherein a first part of the actions is allowed to be performed by the first user and a second part of the actions is allowed to be performed by the second user, and wherein the actions of the first part are related to a media input module of the printer and the actions of the second part are related to an output module of the printer.

12. A method according to any of the claims 7 - 11, wherein an action of the action list of a user of the printer is at least one out of an action for editing a printer system setting, an action for editing a print job property, a changing of media in the media catalogue, a process of calibrating media, a process to attain linearization curves, a process of checking potential media locations in the printer in an operator recoverable error flow.

13. A non-transitory software medium comprising executable program code configured to, when executed on a print controller, enable the print controller to perform the steps of the method according to any of the claims 7 - 11.
